Europäisches Patentamt

European Patent Office

Office européen des brevets

(11) Veröffentlichungsnummer: **0 442 117 A1**

## (12) EUROPÄISCHE PATENTANMELDUNG

(21) Anmeldenummer: **90124883.1**

(22) Anmeldetag: **20.12.90**

(51) Int. Cl.⁵: **B65G 47/252, B65B 69/00**

(30) Priorität: **10.02.90 DE 4004138**

(43) Veröffentlichungstag der Anmeldung:
**21.08.91 Patentblatt 91/34**

(84) Benannte Vertragsstaaten:
**AT BE CH DK ES FR GB IT LI NL SE**

(71) Anmelder: **J.M. Voith GmbH**
**Sankt Pöltener Strasse 43**
**W-7920 Heidenheim(DE)**

(72) Erfinder: **Schneider, Walter**
**Narzissenweg 10**
**W-7920 Heidenheim(DE)**
Erfinder: **Goetze, Jörg**
**Wilhelmshäuserstrasse 17**
**W-3430 Witzenhausen(DE)**

(74) Vertreter: **Weitzel, Wolfgang, Dr.-Ing. et al**
**Friedenstrasse 10**
**W-7920 Heidenheim(DE)**

(54) **Fördereinrichtung für Ballen, insbesondere bei oder in einer Ballen oder Entdrahtungsstation.**

㊄ Es ist ein Gerüst (7) mit Schwenkarmen (3,12) vorgesehen, die jeweils einen Anschlag (2) bzw. (9) tragen. Mit dem einem vorgeschalteten Ballenförderer (16) näheren Anschlag (2) wird erreicht, daß ein Altpapierballen (P) so auf die nachgeschaltete, tiefer liegende Auflagefläche (21) gelangt, daß die Drahtwindungen (B) ihre - vorzugsweise horizontale Lage - wieder haben. Durch den zweiten nachgeschalteten Anschlag (9) wird erreicht, daß eine Drehung des Ballens beim Herunterfallen vom ersten Ballenförderer (16) auf die nachgeschaltete Auflagefläche (21) erfolgt, ohne daß der Altpapierballen sich so weit dreht bzw. überschlägt, daß die Drahtwindungen wieder dieselbe Richtung haben, wie sie sie auf dem ersten Ballenförderer (16) hatten. Man erreicht dadurch, daß z.B. in einer nachgeschalteten Entfernungsstation für die Bindedrähte der Ballen die Windungen der Bindedrähte immer die gleiche Ausrichtung haben, egal in welcher Lage sich der Altpapierballen auf dem ersten Bandförderer (16) befindet.

Fig.1

EP 0 442 117 A1

**FÖRDEREINRICHTUNG FÜR BALLEN, INSBESONDERE BEI ODER IN EINER BALLEN- ODER ENTDRAH-TUNGSSTATION**

Die Erfindung betrifft eine Einrichtung mit einem Ballenförderer, insbesondere für Altpapierballen. Der Ballenförderer bietet eine erste Auflagefläche für die Altpapierballen, und es ist hinter dem Ende des Ballenförderers eine weitere Auflagefläche für die Altpapierballen vorgesehen. Man kann dadurch den Altpapierballen in eine bestimmte Position bringen, so daß ein Zertrennen der den Ballen zusammenhaltenden Bindedrähte und ein Entfernen derselben, z.B. durch Aufwickeln, in geeigneter Weise möglich ist.

Allerdings ist es dabei so, daß der Altpapierballen im allgemeinen so auf der zweiten Auflagefläche liegen muß, daß die Drahtwindungen eine bestimmte Ausrichtung haben, z.B. sämtlich horizontal verlaufen. Die Altpapierballen werden auf dem ersten Ballenförderer von einem Bedienungsmann aufgelegt, wobei allerdings eine Ausrichtung hinsichtlich des Verlaufs der Bindedrähte im allgemeinen nicht möglich ist.

Die Aufgabe der Erfindung ist es daher, eine Einrichtung anzugeben, mit welcher eine eindeutige Ausrichtung der Altpapierballen auf der zweiten Auflagefläche erreicht werden kann.

Diese Aufgabe wird durch die Merkmale des Patentanspruchs 1 gelöst.

Nachfolgend wird die Erfindung anhand der in den Figuren der Zeichnung beschriebenen Ausführungsbeispiele erläutert; dabei stellt:

Fig. 1
eine prinzipmäßige Ansicht einer ersten erfindungsgemäßen Einrichtung,

Fig. 2 bis 4
einen schematischen Ablauf des Fördervorganges der Altpapierballen,

Fig. 5 und 8
jweils eine weitere prinzipmäßige Ansicht einer etwas abgewandelten Einrichtung,

Fig. 6, 7 und 9
jeweils eine vergrößerte Ansicht eines jeweils geänderten Details der Einrichtung dar.

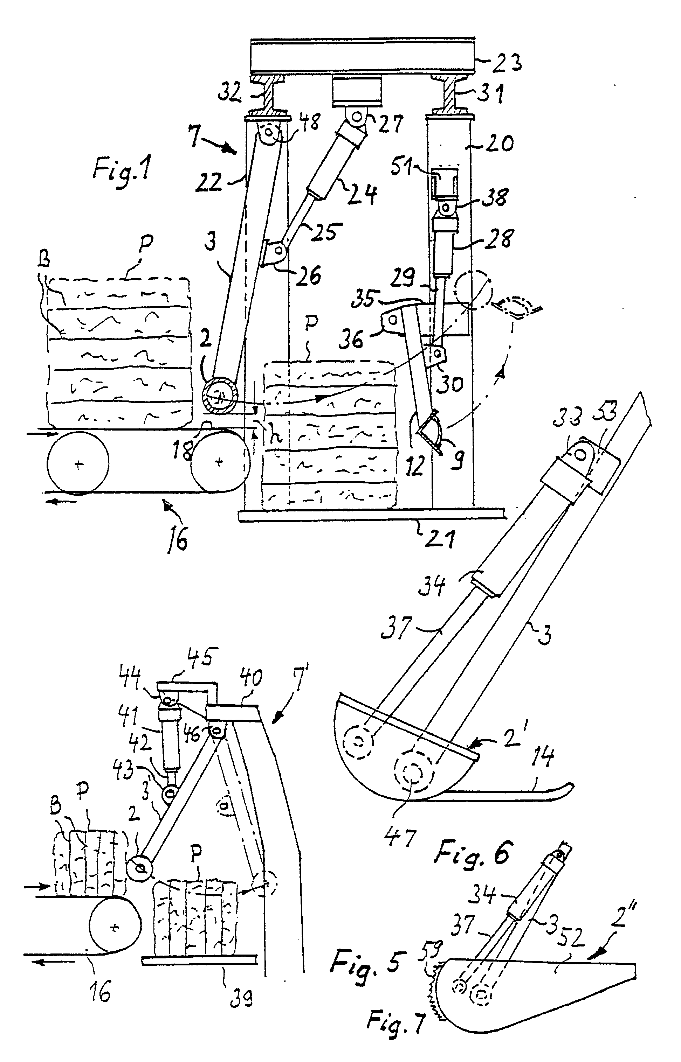

In Fig. 1 ist der erste Ballenförderer mit 16 und die zweite Auflagefläche mit 21 bezeichnet. Dieser Ballenförderer kann insbesondere als Plattenförderer ausgebildet sein. Das gilt natürlich auch in bezug auf die zweite Auflagefläche 21, die tiefer als die Auflagefläche 18 des ersten Ballenförderers 16 angeordnet ist, wobei beide Auflageflächen im wesentlichen horizontal ausgerichtet sind. Der Höhenunterschied zwischen den beiden Auflageflächen beträgt etwa mindestens 25 cm, da die Altpapierballen gewöhnlich einen Querschnitt (Breite x Höhe) von 1 m x 1 m haben. Fällt also ein Altpapierballen ungehindert von der (oberen) Auflagefläche 18 des ersten Ballenförderers 16 hinunter auf die nachgeschaltete Auflagefläche 21, so wird er die Auflageseite ändern, d.h. er dreht sich einmal um seine horizontale Achse. Es wird nachfolgend beschrieben, wie verhindert wird, daß er sich weiter dreht, als bis seine nächste Seite auf der Auflagefläche 21 zur Ruhe kommt. Ferner ist vorgesehen, daß auf den Altpapierballen P so eingewirkt wird, daß er seine Auflageseite nicht ändert, sondern mit derselben Seite auf der nachgeschalteten Auflagefläche 21 aufliegt wie auf der vorangehenden Fläche 18 des ersten Ballenförderers 16, wie es in Fig. 1 angedeutet ist.

Zu dem Zweck sind zwei Anschläge 2 und 9 vorgesehen, die an Schwenkarmen 3 bzw. 12 gehalten sind, die von einem Gerüst 7 getragen werden. Die Schwenkachsen der Schwenkarme sind dabei parallel zur Vorderkante des ersten Ballenförderers 18. Das Gerüst besteht im wesentlichen aus zwei vertikalen Stützen 20 und 22, sowie zwei Querträgern 31 und 32 sowie zwei Längsträgern 22. Die Schwenkachse des Schwenkarmes 3 für den ersten Anschlag 2 ist jeweils durch die Augenplatte 48 zu beiden Seiten des Plattenförderers 16 gegeben. Der Schwenkarm 3 trägt einen Anschlag 2 in Form eines langen, horizontal angeordneten Rohres bzw. Rolle 2. Das Rohr kann fest angeordnet, aber auch drehbar gelagert sein. Der Schwenkweg des Anschlages 2 ist durch die strichpunktierte Linie und Pfeil gekennzeichnet, bis zur anderen, strichpunktiert dargestellten Endstellung. Die Betätigung des Schwenkarmes 3 erfolgt mittels hydraulischem Hubelement 24 über dessen Kolbenstange 25, wobei letztere an dem Schwenkarm 3 über Augenplatte 26 und das Hubelement 24 an dem Längsträger 23 über ein Zwischenstück und Augenplatte 27 gelagert ist. An der hinteren vertikalen Stütze 20 ist über Konsole 51 und Augenplatte 38 ein weiteres hydraulisches Hubelement 28 angelenkt, dessen Kolbenstange 29 über Augenplatte 30 an dem Schwenkarm 12 für den zweiten Anschlag 9 angelenkt ist. Dieser Schwenkarm ist an der zweiten vertikalen Stütze 20 über die Halteplatte 35 und Augenplatte 36 angelenkt. Eine Bewegung des zweiten Anschlages 9 ist ebenfalls durch die strichpunktierte Linie mit dem Pfeil angedeutet, wobei die andere Endstellung ebenfalls strichpunktiert angegeben ist. Kommt ein Altpapierballen P mit einer Lage der ihn umfassenden Bindedrähte B, die, wie in Fig. 1 dargestellt, erwünscht ist, so wird mittels Andrücken des ersten Anschlages 2 an den Ballen verhindert, daß er beim Übergang von der oberen Auflagefläche 18 auf die untere Auflagefläche 21 (z.B. ein Fördertisch) sich auf eine andere Seite dreht; d.h. er wird langsam durch den Anschlag 2 geführt von dem ersten Ballenförderer 16 auf die nachfolgende Auflagefläche 21 übergeleitet, wobei er sich also praktisch immer an dem Anschlag 2 abstützt.

Die Höhendifferenz zwischen der Unterkante bzw. dem tiefsten Punkt der wirksamen Anschlagfläche des Anschlages 2 zur Auflagefläche 18 des Ballenförderers - praktisch in der linken Endstellung des Anschlags - beträgt etwa zwischen 10 und 85 cm. Es ist vorzusehen, daß die Vertikalebene durch die Schwenkachse der Schwenkarme in dem Gerüst 7 in einem Bereich zwischen -20 und +80 cm vor bzw. hinter dem Ende des ersten Ballenförderers 16 - in Förderrichtung betrachtet - liegt, bzw. vorzugsweise der insoweit horizontale Abstand der Schwenkachse der Schwenkarme 3 von dem Ende des Ballenförderers höchstens 40 cm hinter dessen Ende beträgt.

Hat der Altpapierballen eine derartige Lage, daß sich die Drahtwindungen, wie in Fig. 5 dargestellt, sich im wesentlichen in vertikaler Richtung erstrecken, so wird anders vorgegangen. Zu diesem Zweck bleibt der Schwenkarm 3 bzw. sein Anschlag 2 in der in Fig. 1 strichpunktiert dargestellten Endstellung, bei welcher der vorangegangene Altpapierballen nach rechts aus dieser Wendestation wegtransportiert werden kann. Das gleiche gilt für diesen Zustand auch hinsichtlich des Anschlages 9, der dann auch sich in der strichpunktiert dargestellten Endstellung befindet. Bei diesem nächsten Ballen wird dann der Schwenkarm 12 mit dem Anschlag 9 in die ausgezogen dargestellte Endstellung der Figur 1 bewegt. In dieser Stellung verhindert er, daß ein von dem ersten Ballenförderer 16 herabfallender Altpapierballen sich mehr als um 90° drehen kann, d.h. es wird bewirkt, daß er mit seiner nachfolgenden Seite nunmehr auf der zweiten Auflagefläche 21 zur Ruhe kommt. In dieser Lage erstrecken sich dann die Drahtwindungen B ebenfalls wieder horizontal, was z.B. erwünscht sein soll, wenn diese Windungen in der nachfolgenden Entdrahtungsstation zerschnitten und vom Altpapierballen abgerollt werden sollen.

Allerdings scheint es möglich zu sein, überhaupt zu verhindern, daß der Altpapierballen beim Herabfallen sich zu weit dreht, d.h. anders ausgedrückt, man kann durch Anpassung der Bandgeschwindigkeit des Plattenbandes 16 und der Fallhöhe des Altpapierballens erreichen, daß er sich nur so weit dreht, daß er auf der nachfolgenden Seite zu liegen kommt. Andererseits scheint es auch möglich zu sein, daß bei nicht zu stark wechselnder Ballenhöhe bzw. -breite allein der Anschlag 2 genügt, um in seiner strichpunktiert dargestellten Endstellung das Weiterdrehen des Altpapierballens zu verhindern. Dies ist z.B. in Fig. 5 dargestellt, wo ein nachgeschalteter Ballenförderer 39 quer zu dem vorangehenden Ballenförderer 16 angeordnet ist. In der strichpunktiert dargestellten Stellung des Anschlages 2 seines Schwenkarmes 3' verhindert der Anschlag, daß der Altpapierballen sich beim Herabfallen zu weit dreht bzw. überschlägt. Hier ist der Schwenkarm 3' an einem Querträger 40 eines Gerüsts 7' mittels Augenplatte 46 gelagert. Das Hubelement 41 für den Schwenkarm 3' ist über Augenplatte 44 an einer Konsole 45 gehalten, die an dem Querträger 40 befestigt ist. Die Kolbenstange 42 des Hubelements 41 ist über Augenplatte 43 an dem Schwenkarm 3' angelenkt. In den Figuren 2 bis 4 ist der Vorgang dargestellt, wie er sich in seinem zeitlichen Ablauf in dem Falle darstellt, wenn der Altpapierballen bereits auf dem ersten Ballenförderer die richtige Lage hat, wobei der erste Anschlag 2 in Aktion tritt.

In Fig. 6 ist eine weitere Möglichkeit dargestellt, um im wesentlichen mit nur einem einzigen Anschlag auszukommen. In diesem Falle ist der Anschlag 2'als ein Balken mit im wesentlichen halbkreisförmigem Querschnitt ausgebildet. Er trägt über seine Länge verteilt Anschlagstücke 14, die entweder als Stangen oder als schmale Platten ausgebildet sein können. Der Anschlag 2' ist an seinem Schwenkarm 3 über die Lagerstelle 47 drehbar bzw. schwenkbar gelagert. Zur Herbeiführung dieser zweiten Schwenkbewegung ist ein Hubelement 34 vorgesehen, das mittels Kolbenstange 37 an dem Anschlag 2' angreift. Das Hubelement 34 ist an Schwenkarm 3 jeweils über Augenplatte 33 und Halteplatte 53 gelagert. Man kann den Anschlag 2'in der Anordnung nach Fig. 1 verwenden, wobei auf den zweiten Anschlag 9 und seinen Schwenkarm 12 verzichtet wird. In der strichpunktiert dargestellten Endstellung der Fig.1 des Anschlages 2' werden dann durch Schwenken des Anschlages 2' um seine Schwenkachse 47 die Anschläge 14 in eine untere Position gebracht, so daß sie auch bei wechselnden Höhen oder Breiten der Altpapierballen auf jeden Fall verhindern, daß ein "falsch" auf dem ersten Ballenförderer liegender Altpapierballen sich zu weit dreht bzw. zu weit überschlägt.

Im Falle von Fig. 1 sollte sich die Schwenkachse (bei 48) des ersten Schwenkarmes 3 in einer Vertikalebene befinden, deren Bereich sich etwa zwischen 20 cm vor der Endkante des Ballenförderers 16 und 80 cm, vorzugsweise 40 cm, hinter dieser Endkante befindet. Im Falle von Fig. 5 kann sich die Schwenkachse (bei 46) des Schwenkarmes 3' zwischen 60 und 100 cm nach der Endkante des ersten Ballenförderers 16 befinden.

Fig. 7 zeigt eine Abwandlung des Anschlags 2" der Fig. 6, wobei er einen einzigen langen Fortsatz 52 aufweist, der das zu weitgehende Überschlagen des Ballens verhindern soll. Er zeigt auch eine spitz-rauhe Anschlagfläche 59 für den Ballen, damit dieser nicht unkontrolliert von ihm abrutscht.

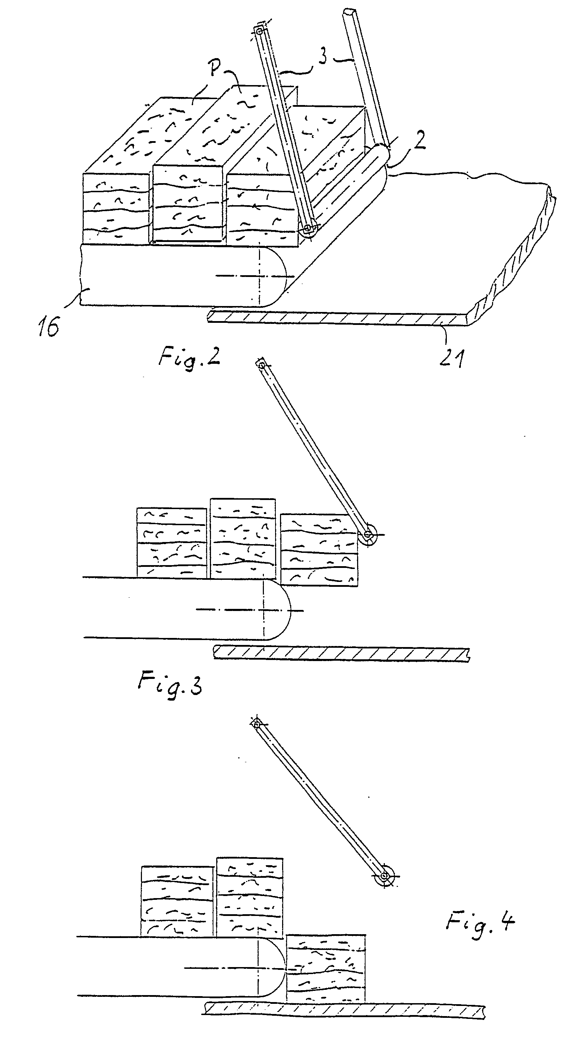

In Fig. 8 ist eine Anordnung auch mit nur einem Anschlag dargestellt, der an je einem Schwenkarm 3" an jedem seiner Enden gehalten ist, der aus zwei gelenkig an der Gelenkstelle 69 miteinander verbundenen Teilen 61 und 62 besteht. Ein hydraulisches Hubelement 65 ist einerseits am oberen Teil 62 an Lagerauge 68 und über seine Kolbenstange 66 an Lagerauge 67 am unteren Teil 61 befestigt. Soll ein Überschlagen des Ballens auf dem Tisch 21 verhindert werden, wird der untere Armteil 61 in die strichpunktiert dargestellte, "gestreckte" Position geschwenkt.

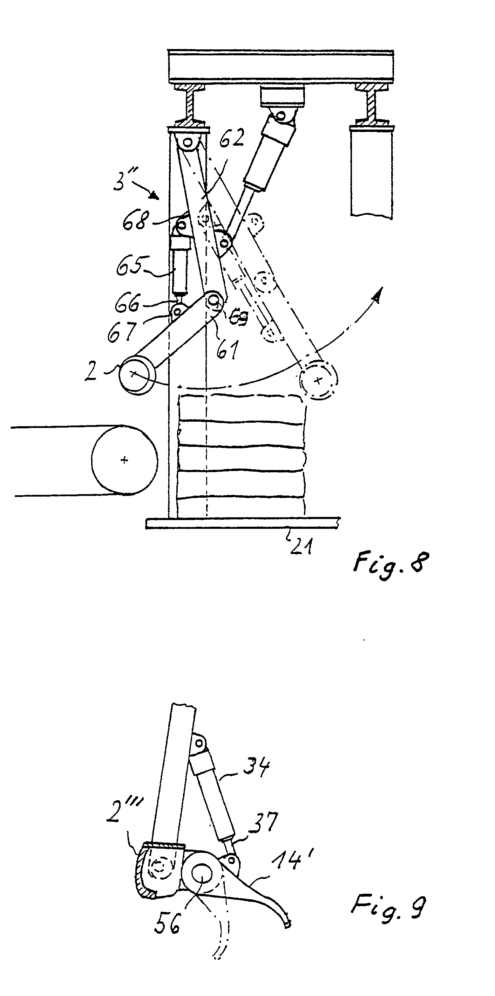

In Fig. 9 sind ein oder mehrere zusätzliche Anschläge 14' am ersten (Haupt-) Anschlag 2''' schwenkbar um Schwenkachse 56 befestigt und dienen in der strichpunktiert dargestellten Position zum Stoppen des Ballens gegen mehrmaliges Überschlagen desselben. Es können mehrere, zueinander parallele, zusätzliche Anschläge 14' über die Länge des hier ballenförmigen Anschlages 2''' verteilt durch starre Verbindungsstücke oder eine Stange miteinander verbunden sein.

Grundsätzlich ist zu sagen, daß man die Altpapierballen P auf dem Ballenförderer 16 mit ihrer Länge in Querrichtung des Ballenförderers (Plattenbandes) auflegt. Daher ist die Länge der Anschläge 2 und 9 bzw. 2' wesentlich größer zu bemessen, als diese maximale Länge des Altpapierballens, die etwa 2 m beträgt. Man wird die Anschläge etwa so lang machen, wie die Breite der Platten 18 (allgemein Breite der Förderfläche der Ballenförderer) beträgt. Die Schwenkarme 3 und 12 bzw. 3' befinden sich dann jeweils seitlich neben der durch die Plattenbänder gegebenen Arbeitsfläche.

**Patentansprüche**

1.  Einrichtung mit einem Ballenförderer für Altpapierballen, mit einer oberen Auflagefläche (18 oberes, vorlaufendes Trum), dadurch gekennzeichnet, daß diese zumindest einen Endbereich aufweist, der horizontal ausgerichtet ist und einen zum Sich-Überschlagen der Altpapierballen ausreichenden Höhenabstand zu der tiefer als diese gelegenen, nachfolgenden, im wesentlichen horizontalen Auflagefläche (21) für die Altpapierballen von mindestens etwa 25 cm aufweist, daß ein im wesentlichen in Vorlaufrichtung des Ballenförderers ortsveränderlicher, im wesentlichen oberhalb der nachfolgenden Auflagefläche (21) angeordneter und in Horizontalrichtung langgestreckter Anschlag mit einer Haupterstreckung quer zum ersten Ballenförderer (16) parallel zu dessen Endkante vorgesehen ist, dessen wirksame Anschlagfläche mit ihrer Unterkante in seiner tiefsten Stellung, die in ihrer dem ersten Ballenförderer (16) zumindest sehr nahen Position erreicht ist, einen Höhenabstand (h) von der (oberen) Auflagefläche (18) des Ballenförderers (16) von höchstens 15 cm weniger als die Höhe des Altpapierballens beträgt - etwa 85 cm - aufweist, um das Sich-Überschlagen des Altpapierballens zu verhindern.

2.  Einrichtung nach Anspruch 1, dadurch gekennzeichnet, daß die dem ersten Ballenförderer (16) nahe Endposition des Anschlages (2) auch im wesentlichen die tiefste Position desselben ist.

3.  Einrichtung nach Anspruch 2, dadurch gekennzeichnet, daß in einer dem ersten Ballenförderer (16) am weitesten entfernten Position des Anschlages (2) die Höhe seines tiefsten Punktes oberhalb der nachfolgenden, zweiten Auflagefläche (21) größer ist als sie der Oberkante des flach auf dieser zweiten Auflagefläche (21) aufliegenden Altpapierballens entspricht.

4.  Einrichtung nach einem der Ansprüche 1 bis 3, dadurch gekennzeichnet, daß mit einer zur Endkante in Förderrichtung betrachtet des Ballenförderers parallelen Schwenkachse Schwenkarme (3) als Träger für den Anschlag (2) vorgesehen sind.

5.  Einrichtung nach Anspruch 4, dadurch gekennzeichnet, daß der Abstand der Vertikalebene durch die Schwenkachse der Schwenkarme in einem Schwenkgerüst (7) in einem Bereich zwischen -20 und +80 cm vor bzw. hinter dem Ende des ersten Ballenförderers (16) in Förderrichtung betrachtet liegt.

6.  Einrichtung nach Anspruch 5, dadurch gekennzeichnet, daß der insoweit horizontale Abstand der Schwenkachse der Schwenkarme (3) von dem Ende des Ballenförderers höchstens 40 cm hinter dessen Ende in Förderrichtung betrachtet beträgt.

7.  Einrichtung nach einem der Ansprüche 1 bis 6, dadurch gekennzeichnet, daß ein zweiter, weiter vom Ende des Ballenförderers als der erste angeordneter, im wesentlichen quer zur Endkante des ersten Ballenförderers (16) ortsveränderlicher Anschlag (3) vorgesehen ist, dessen unterste Kante in seiner dem ersten Ballenförderer (16) näheren Endposition eine geringere Höhe aufweist, als sie der Oberkante des flach auf der zweiten Auflagefläche (21) aufliegenden Altpapierballens entspricht.

8. Einrichtung nach Anspruch 7, dadurch gekennzeichnet, daß der zweite Anschlag (9) ebenfalls als eine im wesentlichen in Horizontalerichtung und quer zur Förderrichtung des ersten Ballenförderers (16) langgestreckte Barriere ausgebildet ist.

9. Einrichtung nach Anspruch 8, dadurch gekennzeichnet, daß zur Halterung des zweiten Anschlages ebenfalls Schwenkarme (12) vorgesehen sind, deren Schwenkachse sich in wesentlich geringerer Höhe als der erste Anschlag über der nachfolgenden, zweiten Auflagefläche (21) und in einem größeren Abstand von dem Ende des ersten Ballenförderers (16) als die Schwenkachse der Schwenkarme (3) des ersten Anschlages (2) befindet.

10. Einrichtung nach einem der Ansprüche 1 bis 6, dadurch gekennzeichnet, daß der Anschlag (2') drehbar an seiner Halterung (Schwenkarme 3') gelagert ist, daß er eine eigene, innerhalb seines Umfanges gelegene, zu der Längserstreckung parallele Schwenk- oder Drehachse aufweist, daß Mittel zu seiner Drehung oder Verschwenkung an ihm angreifen, und daß an ihm weitere längliche Anschlagstücke (14) befestigt sind, deren Haupterstreckung im wesentlichen senkrecht zur Schwenkachse verläuft, und die aus einer Position, die zumindest nicht höher liegt als die Unterkante des Anschlages (2') in eine andere Position in Richtung zum Ende des ersten Ballenförderers (16) schwenkbar sind, in welcher sie eine wesentlich tiefere Position auf der dann dem ersten Ballenförderer (16) näheren Seite des Anschlages (2') einnehmen.

11. Einrichtung nach Anspruch 10, dadurch gekennzeichnet, daß die weiteren Anschlagstücke (14) mit dem ersten Anschlag (2') fest verbunden sind und die Betätigungsmittel (34, 37) für den Schwenkvorgang an dem letzteren angreifen.

12. Einrichtung nach Anspruch 10, dadurch gekennzeichnet, daß die weiteren Anschlagstücke (14') schwenkbar mit einer zu der Schwenkachse des Anschlages (2''') parallelen Schwenkachse mit letzterem verbunden sind und daß die Betätigungsmittel (34, 37) an den weiteren Anschlagstücken (14) oder einem diese verbindenden Verbindungsstück angreifen bzw. die Anschlagstücke (14) durch ein Verbindungsstück miteinander verbunden sind.

13. Einrichtung nach einem der Ansprüche 1 bis 6, dadurch gekennzeichnet, daß die zweite Auflagefläche (21) die (obere) Auflagefläche eines zweiten Ballenförderers ist, der quer zu dem ersten Ballenförderer (16) an dessen Ende angeordnet ist.

14. Einrichtung nach einem der Ansprüche 1 bis 10, dadurch gekennzeichnet, daß der Schwenkarm (3'') für den Anschlag (2) zwei gelenkig miteinander verbundene Teile (61, 62) aufweist, die zueinander in mindestens zwei bestimmten Winkellagen festhaltbar sind, und von denen das von der gemeinsamen Schwenkachse entfernte Teil (61) an seinem von der Gelenkstelle (69) entfernten Ende den Anschlag (2) als einzigen, vorgesehenen Anschlag trägt.

Fig.1

Fig. 5

Fig. 6

Fig. 7

P

3

2

16

21

Fig. 2

Fig. 3

Fig. 4

Fig. 8

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 820 282 (SCHNEIDER)<br>* Spalte 5, Zeilen 45 - 73; Figur 1 *<br>– – – | 1 | B 65 G 47/252<br>B 65 B 69/00 |
| A | DD-A-1 326 51 (FISCHER ET AL.)<br>* Figuren 2, 3 *<br>– – – | 1,13 | |
| A | DE-B-2 504 306 (WARIMEX OTTOKAR HERMANN)<br>* Spalte 2, Zeilen 8 - 29; Anspruch 1; Figuren 1, 2 *<br>– – – | 1 | |
| A | US-A-1 449 027 (ALLEN)<br>* Figuren 1-3 *<br>– – – – – | 1,2,4 | |

**RECHERCHIERTE SACHGEBIETE (Int. Cl.5)**

B 65 B
B 65 G
D 01 G

Der vorliegende Recherchenbericht wurde für alle Patentansprüche erstellt

| Recherchenort | Abschlußdatum der Recherche | Prüfer |
|---|---|---|
| Berlin | 16 Mai 91 | SIMON J J P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes Dokument